# EUROPEAN PATENT SPECIFICATION

(11) **EP 3 589 131 B1**
(45) Date of publication and mention of the grant of the patent: **27.11.2024**
(21) Application number: 18723609.6
(22) Date of filing: 02.03.2018
(51) Int. Cl.: A21D 13/30, A21D 13/41, A21D 8/02, A21D 13/10, A21D 8/06

(54) **A METHOD FOR PROVIDING A DOUGH BLANK FOR PREPARING A FOOD PRODUCT SUCH AS PIZZA, CALZONE, FOCACCIA**
VERFAHREN ZUR BEREITSTELLUNG EINES TEIGROHLINGS ZUR HERSTELLUNG EINES NAHRUNGSMITTELS WIE PIZZA, CALZONE, FOCACCIA
PROCÉDÉ PERMETTANT DE FOURNIR UNE ÉBAUCHE DE PÂTE EN VUE DE PRÉPARER UN PRODUIT ALIMENTAIRE TEL QU'UNE PIZZA, UNE CALZONE, UNE FOUGASSE

(30) Priority: 02.03.2017 IT 201700023273
(43) Date of publication of application: 08.01.2020
(73) Proprietor: AMO(R) S.r.l., 20154 Milano (IT)
(72) Inventor: ALAJMO, Massimiliano, I-35030 Rubano (PD) (IT)
(74) Representative: Rapisardi, Mariacristina
(86) International application number: PCT/IT2018/000030
(87) International publication number: WO 2018/158787

(56) References cited:
- WO-A1-99/44429
- IT-A1- PD20 130 027
- JP-A- 2007 029 010
- JP-A- 2015 100 314
- US-A- 3 615 678
- US-A- 4 285 979
- US-B1- 6 365 210

## Description

The present invention relates to a method for providing a dough blank for preparing a food product such as pizza, focaccia, calzone.

<Prior art related disclosures can be found in US 4 285 979 A (IZZI EDMUND F) 25 August 1981; JP 2015 100314 A (NISSHIN FLOUR MILLING INC) 4 June 2015; US 3 615 678 A (TANGEL FRANK O et al) 26 October 1971; WO 99/44429 A1 (KIRIN BEER KABUSHIKI KAISY [JP] et al) 10 September 1999; US 6 365 210 B1 (SCHAIBLE II JOHN E [US] et al) 2 April 2002; JP 2007 029010 A (MEIJI MILK PROD CO LTD) 8 February and ITPD20130027A1 (ALAJMO S P A) 9 August 2014>

The present invention constitutes an improvement of a previous patent filed by the same owner with the same inventor and granted in Italy with no. 1415873. As a further inventive improvement of the mentioned patent, the main objects of the present invention are to make the pizza even softer by differently structuring the dough blank obtained from the method. A further object is that of obtaining a smooth and soft structure that is more appealing and generally easier to digest.

A further object of the invention is that of being able to control the gelatinization of the starch of the dough blank and its crystallization.

A further object is that of using different flavouring agents or natural ingredients.

The proposed aims are reached by a method according to claim 1 and according to the clarifying dependent claims.

The method is illustrated by way of non-limiting example with the aid of the figures contained in the appended tables wherein:

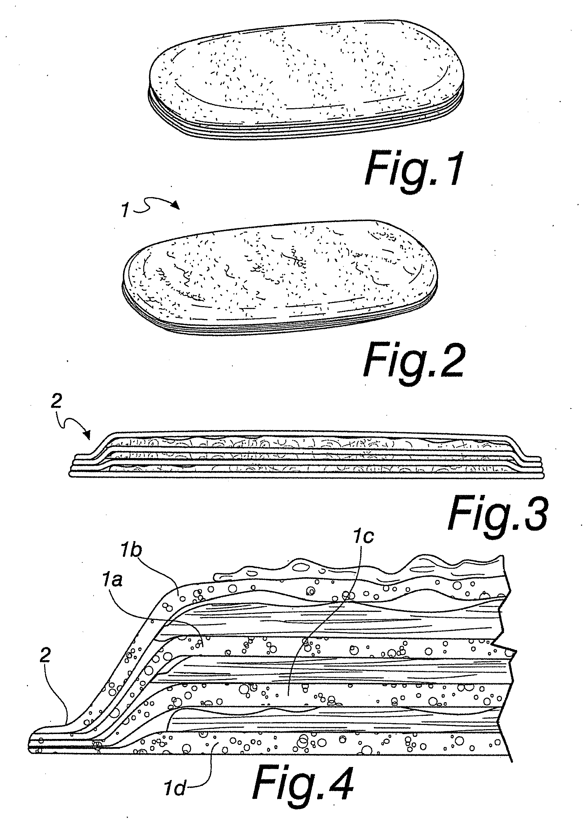

figure 1 shows a first step of preparing the individual sheets;
figure 2 shows the step of stacking the individual sheets;
figure 3 shows the finished product after the first cooking and the second cooking.

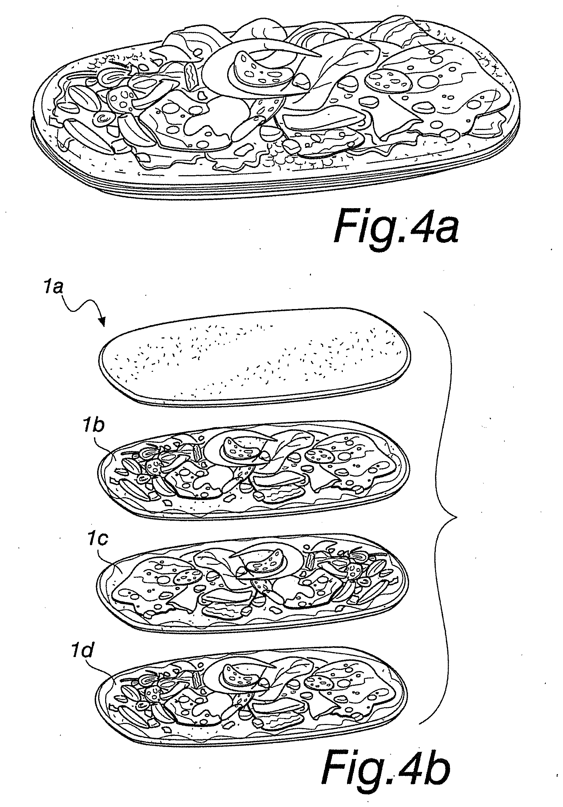

figures 4, 4a and 4b show a section of the product that highlights the arrangement of the sheets;

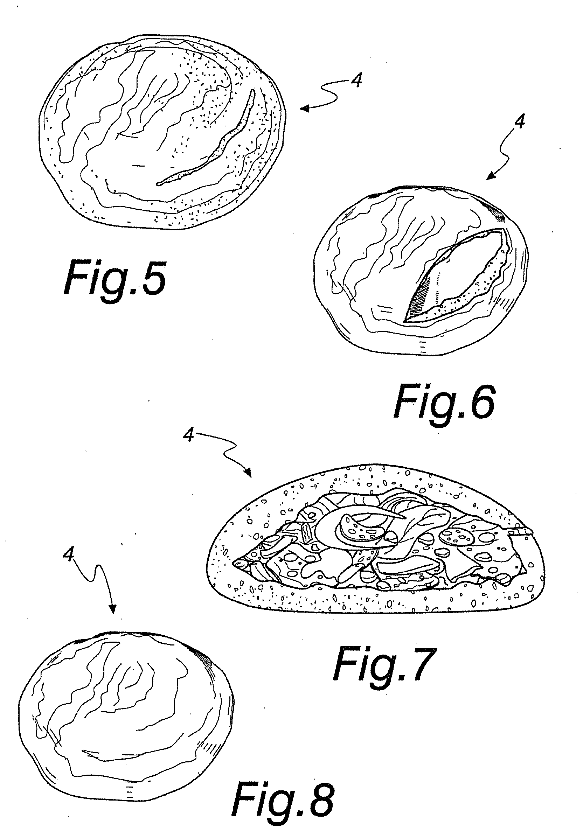

figure 5 shows the conformation of a focaccia;
figure 6 shows the focaccia according to figure 5 open;
figure 7 shows the filling of the focaccia with completion products;
figure 8 shows the reclosing of the focaccia before the final cooking.
figure 9 typically shows a calzone.
figure 10 shows the calzone according to fig. 9 folded.
figure 11 is a section of the calzone according to figure 10.

With reference to the cited figures contained in the appended tables of the drawings the method following a step consisting of mixing flour, water, yeast, salt and oil, not indicated in the figures as it is part of the prior art as can be deduced from the previous patent IT1415873.

The dough thus obtained is divided into portions of a preset weight, which are placed in a proving room at a temperature of about 28°_C with about 45% humidity for a time of about 2 hours for a first fermentation and rising step.

After this time, the two portions are pressed and/or rolled so as to form thin sheets indicated with 1a, 1b, 1c, 1d, and as can be seen in the appended figures a certain number of sheets are stacked on top of each other, after interposing between one and the other oil or fat and any flavouring agents and/or powders.

The sheets can be made with dough having different flavours and/or colours.

The presence of oil or fat between the sheets allows them to be kept physically separate from each other during the processing steps.

The quantity of oil or fat that is applied on the sheets is a determining factor for obtaining a greater or lesser possibility for the sheets to separate from each other.

For this reason, oil or fat are applied to the central surface of the sheets while their application is avoided on the perimeter surface thereof, therefore allowing the sealing of the same.

Perimetrally, the stacked sheets are crushed to form a rim 2 that holds them together in the subsequent operating steps and also in the final product obtained.

In this way, in the perimeter part of the sheets the expansion of the pockets of the sheets does not take place or takes place only minimally during the processing steps thereof.

The dough blank obtained is put back into the proving room to rise for about three hours at 28° C with 45% humidity to obtain further fermentation and rising that was interrupted following the pressing and/or rolling operation on the sheets.

In particular, the second rising or fermentation allows a planned pocket to be recreated in the central zone of the stacked sheets which has the possibility to swell again while the perimeter zone that has been crushed to create the seal tends not to swell again as the central zone does, so as to be able to create a real chamber.

Consequently, thanks to the presence of oil or fat applied as planned, this second rising and fermentation allows a planned degree of separation to be maintained at least between two of the sheets that have been stacked.

In practice, increasing the amount of oil or fat causes a proportional increase in the detachment potential between the sheets which allows, during the subsequent cooking step, a chamber of a variable size to be created or not, which is perimetrally closed.

The closure of the chamber, in the case of a calzone for example, is performed both by folding the sheet into two half-parts and by crushing the remaining part.

If an open chamber is to be obtained, in the case of forming a cannolo (tube shape) for example, a shaping mould is used.

A final cooking step with saturated steam follows, at a temperature comprised in the range between 100°C and 110°C for a period comprised between 20 and 30 minutes.

When everything is cooked, it is left to cool so as to obtain the controlled crystallization or retrogradation of the starch with the consequent expulsion of part of the water that had been incorporated into the dough of the sheets.

The crystallization or retrogradation of the starch allows a thin and crisp outer surface of the sheets to be obtained, with a higher degree of hardness than that inside them.

In particular, having controlled the gelatinization of the starch and therefore its crystallization after cooling, it is possible to obtain a calibrated surface hardness of the sheets, stacked on top of each other and held together by the rim, which prevents them flexing independently during handling.

Preferably the cooling is performed with a blast chiller and the dough blank obtained is subsequently garnished with completion products such as meat, fish, vegetables, dairy products, chocolates, etc. before and/or after the second cooking step which may be with steam, by grilling or by frying.

Conveniently the product thus obtained can be eaten immediately or, before filling, it can be frozen to keep it ready for a long time.

A focaccia can be made by the same methods as can be seen in the appended figures where it is indicated by number 4.

After the first cooking operation the focaccia is opened by making a lateral cut through which various types of filling products can be inserted. This opening is subsequently closed and the focaccia is passed to the second final cooking step, again with saturated steam, or grilling, frying or baking.

Also in this case the focaccia can be garnished on the top with other completion products and can be eaten straight away or stored frozen before filling.

In both cases, a very soft product is obtained that can be flavoured in various ways while the layers can be kept separate by spreading them with a film of oil or other fat.

In the cooking process it is possible to opt for obtaining a smooth and soft structure or possibly a structure with a crispy outside.

The layers can be produced with different flavoured or unflavoured dough or with different flours.

During the first cooking step to obtain the dough blank comprising various layers of dough it is easy to control the gelatinization of the starches in a much better way with respect to the classic cooking of a pizza which leads to better digestibility of the dough with respect to what is obtained with known techniques due to the effect of the hydrolysis of the starch.

In particular, this takes into account that the two complex molecules of the starch, amylose and amylopectin, aggregate to form granules that are insoluble in water at room temperature which are difficult for digestive enzymes to attack.

To become digestible, the starch granules must be brought to a high temperature, in an aqueous environment.

In these conditions they are hydrated, lose their ordered structure and assume a disordered structure, causing the gelatinization process of the starches, which makes them likely to be attacked by digestive enzymes and when cooled, they allow, as mentioned above, to obtain the crystallization or retrogradation of the starch, obtaining on the surface of the sheets a particularly crisp characteristic, suitable for allowing the product obtained to maintain the predetermined shape that was given to it during the step of stacking the sheets.

By using an oven of the rotary type or a radiation system, a crisp outside and a soft inside can be obtained, already steam cooked in the first cooking step; if the second cooking step is steam cooking, the dough of the final product is slightly moist but not sticky and therefore easier to digest and pleasant to taste.

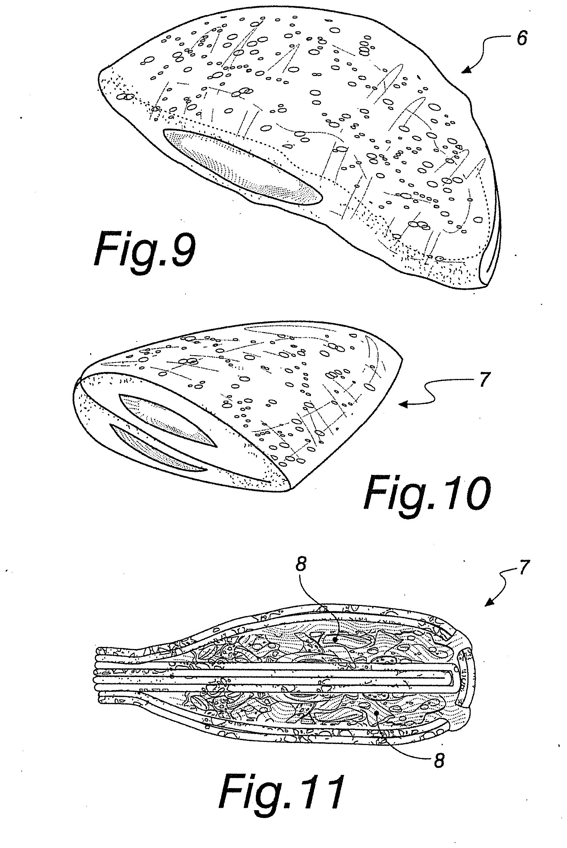

The same operations can be adopted for a simple calzone, indicated with number 6 in figure 9 or double folded indicated with 7 in figures 10 and 11 where the filling products indicated with 8 can also be seen.

Also in the case of the calzone, two sheets are stacked according to the invention, obtained, in a preferred solution as represented in fig. 9 by the folding and stacking of two half-parts of the same sheet.

Hence the invention has developed a method that allows a crispy or soft pizza or focaccia to be made in the case of second steam cooking which, thanks to the two first and second cooking steps, allows a stable, perfectly cooked preparation to be obtained with a thin, crisp or soft outside in the case of steam cooking with a very aerated and light inside given that the individual layers are detached from each other.

As can be noted, the process according to the invention is particularly simple and allows a pizza, a soft focaccia or a calzone to be made cheaply starting from flat dough blanks stacked and held together of which, during the preparation according to the invention, both the gelatinization of the starch and their cooling and the crystallization of the starch are controlled in a planned way to create a crystallized surface and a predefined hardness adapted to allow, as well as better organoleptic qualities, the maintenance of the original shape also during the handling of the dough blank.

The layering allows the creation of chambers separated from each other by oil and fat in general in which any type of flavouring or food product can be placed to be combined in taste with other products without losing the delicate or organoleptic characteristics of each product.

From the above it is easy to note the remarkable flexibility of use of the dough blank obtained according to the invention as it can be combined or filled with all types of food products to be savoured both hot or cold.

In fact, the dough blank is able to guarantee the optimal organoleptic and healthy characteristics for each food product with which it is combined or filled since it is possible to perform its final cooking in different ways that can be selected from those that guarantee that the intrinsic organoleptic qualities of the products combined with it or with which it is filled are preserved.

## Claims

1. A method for providing a dough blank for preparing a food product such as pizza, calzone, focaccia, comprising the following operating steps:
a first step, in which flour, water, yeast, salt and oil are mixed in proportions suitable to provide a mixture;
a second step, in which the dough obtained from the first step is divided into portions of preset weight which are placed in a proving room;
**characterized in that** it consists of:
extracting said portions of a preset weight from said proving room;
pressing and/or rolling said portions so as to form thin and flat sheets;
stacking a certain preset number of sheets with the interposition, between one and the other, of oil or fats or optionally flavouring agents or food products, oil or fats being applied to a central surface of the sheets while their application is avoided on the perimeter surface thereof;
perimetrally sealing said stacked sheets by crushing them to form a rim adapted to hold them together in the subsequent operating steps and also in the final product obtained;
then placing said stacked and sealed sheets back to rise in a fermentation and proving room;
cooking with saturated steam said stacked, sealed, fermented and risen sheets at a temperature comprised between 100°C and 110°C for a time comprised between 20 and 30 minutes;
checking the gelatinization of the starches of said stacked sheets during said cooking and cooling said sheets obtaining the controlled crystallization or retrogradation of said gelatinised starches, so as to create an outer surface that is crispier than the inner part of the dough blank;
final cooking by saturated steam at a temperature comprised between 100°C and 110°C for a period comprised between 20 and 30 minutes, or by grilling, or by frying or by baking.

2. The method according to claim 1, **characterized in that** in the second operating step the portions are arranged in a proving room at approximately 28°C with approximately 45% humidity for a time of approximately two hours for the first fermentation and rising step.

3. The method according to claim 1, **characterized in that** the stacked sheets with interposition between them of oil or fat or optionally flavouring agents or food products is put back to rise in a proving room for approximately 3 hours at 28°C with 45% humidity in order to obtain a further fermentation and rising.

4. The method according to claim 1, **characterized in that** comprises a step of cooling and optionally freezing the product obtained from the previously described operations in order to obtain a product that can be used even at a later time with respect to the preparation time.

5. The method according to claim 1, **characterized in that** between at least two of said stacked sheets at least one closed chamber is created having at least partially said rim.

6. The method according to claim 1, **characterized in that** between at least two of said sheets at least one open chamber is created with a shaping mould.

## Patentansprüche

1. Ein Verfahren zur Bereitstellung eines Teigrohlings zur Herstellung eines Lebensmittels wie Pizza, Calzone, Focaccia, umfassend die folgenden Arbeitsschritte:
ein erster Schritt, bei dem Mehl, Wasser, Hefe, Salz und Öl in Anteilen gemischt werden, die geeignet sind, eine Mischung zu liefern;
ein zweiter Schritt, bei dem der aus dem ersten Schritt erhaltene Teig in Portionen von vorgegebenem Gewicht geteilt wird, die in einen Gärraum gegeben werden;
**dadurch gekennzeichnet, dass** es besteht aus:
Entnahme der genannten Portionen von vorgegebenem Gewicht aus dem Gärraum;
Pressen und/oder Ausrollen der Portionen, um dünne und flache Teigblätter zu formen;
Stapeln einer vorgegebenen Anzahl von Blättern mit der Zwischenlage von Öl oder Fetten oder optional Aromastoffen oder Lebensmitteln zwischen den Blättern, wobei Öl oder Fette auf eine zentrale Fläche der Blätter aufgetragen werden, während ihre Anwendung auf der Randfläche vermieden wird;
Peripheres Versiegeln der gestapelten Blätter durch Quetschen, um einen Rand zu bilden, der sie in den nachfolgenden Arbeitsschritten sowie auch im erhaltenen Endprodukt zusammenhält;
dann das Zurücklegen der gestapelten und versiegelten Blätter zum Aufgehen in einen Gär- und Reiferaum;
Dämpfen der gestapelten, versiegelten, gegorenen und aufgegangenen Blätter mit gesättigtem Dampf bei einer Temperatur zwischen 100° und 110° für eine Zeitspanne zwischen 20 und 30 Minuten;
Überprüfen der Verkleisterung der Stärken der genannten gestapelten Blätter während des Dämpfvorgangs und Abkühlen der Blätter zur Erzielung der kontrollierten Kristallisation oder Retrogradation der genannten verkleisterten Stärken, um eine Außenfläche zu schaffen, die knuspriger ist als der innere Teil des Teigrohlings;
endgültiges Garen mit gesättigtem Dampf bei einer Temperatur zwischen 100° und 110° für einen Zeitraum zwischen 20 und 30 Minuten, oder durch Grillen, oder durch Braten, oder durch Backen.

2. Das Verfahren nach Anspruch 1, **dadurch gekennzeichnet, dass** im zweiten Arbeitsschritt die Portionen in einem Gärraum bei ungefähr 28°C mit ungefähr 45% Luftfeuchtigkeit für eine Zeit von ungefähr zwei Stunden für den ersten Gär- und Aufgehvorgang angeordnet werden.

3. Das Verfahren nach Anspruch 1, **dadurch gekennzeichnet, dass** die gestapelten Blätter mit der Zwischenlage von Öl oder Fett oder optional Aromastoffen oder Lebensmitteln zurück in einen Gärraum gelegt werden, um für ungefähr 3 Stunden bei 28°C mit 45% Luftfeuchtigkeit eine weitere Gärung und ein weiteres Aufgehen zu ermöglichen.

4. Das Verfahren nach Anspruch 1, **dadurch gekennzeichnet, dass** ein Schritt des Abkühlens und optionalen Einfrierens des aus den zuvor beschriebenen Vorgängen erhaltenen Produkts umfasst, um ein Produkt zu erhalten, das auch zu einem späteren Zeitpunkt im Vergleich zur Zubereitungszeit verwendet werden kann.

5. Das Verfahren nach Anspruch 1, **dadurch gekennzeichnet, dass** zwischen mindestens zwei der gestapelten Blätter mindestens eine geschlossene Kammer geschaffen wird, die zumindest teilweise den genannten Rand aufweist.

6. Das Verfahren nach Anspruch 1, **dadurch gekennzeichnet, dass** zwischen mindestens zwei der Blätter mindestens eine offene Kammer mit einer Formschablone geschaffen wird.

## Revendications

1. Un procédé pour fournir une pâte à préparer un produit alimentaire tel que pizza, calzone, focaccia, comprenant les étapes opératoires suivantes :
une première étape, dans laquelle la farine, l'eau, la levure, le sel et l'huile sont mélangés dans des proportions adaptées pour fournir un mélange ;
une deuxième étape, dans laquelle la pâte obtenue à partir de la première étape est divisée en portions de poids prédéterminé qui sont placées dans une chambre de fermentation ;
**caractérisé en ce qu'**il consiste à :
extraire lesdites portions de poids prédéterminé de ladite chambre de fermentation ;
presser et/ou étaler lesdites portions de manière à former des feuilles fines et plates ;
empiler un certain nombre prédéterminé de feuilles avec l'interposition, entre chacune, d'huile ou de graisses ou éventuellement d'agents aromatisants ou de produits alimentaires, l'huile ou les graisses étant appliquées sur une surface centrale des feuilles tandis que leur application est évitée sur la surface périphérique de celles-ci ;
sceller périphériquement lesdites feuilles empilées, en les écrasant pour former un bord adapté à les maintenir ensemble dans les étapes opératoires suivantes et également dans le produit final obtenu;
puis replacer lesdites feuilles empilées et scellées pour qu'elles lèvent à nouveau dans une chambre de fermentation ;
cuire à la vapeur saturée lesdites feuilles empilées, scellées, fermentées et levées à une température comprise entre 100° et 110° pendant une durée comprise entre 20 et 30 minutes;
vérifier la gélatinisation des amidons desdites feuilles empilées pendant ladite cuisson et refroidir lesdites feuilles pour obtenir la cristallisation contrôlée ou la rétrogradation desdits amidons gélatinisés, de manière à créer une surface extérieure plus croustillante que la partie intérieure de la pâte ;
cuisson finale à la vapeur saturée à une température comprise entre 100° et 110° pendant une période comprise entre 20 et 30 minutes, ou par grillage, ou par friture ou par cuisson au four.

2. Le procédé selon la revendication 1, **caractérisé en ce que**, lors de la deuxième étape opératoire, les portions sont disposées dans une chambre de fermentation à environ 28°C avec environ 45% d'humidité pendant environ deux heures pour la première étape de fermentation et de levée.

3. Le procédé selon la revendication 1, **caractérisé en ce que** les feuilles empilées, avec interposition entre elles d'huile ou de graisse ou éventuellement d'agents aromatisants ou de produits alimentaires, sont replacées dans une chambre de fermentation pendant environ 3 heures à 28°C avec 45% d'humidité afin d'obtenir une fermentation et une levée supplémentaires.

4. Le procédé selon la revendication 1, **caractérisé en ce qu'**il comprend une étape de refroidissement et éventuellement de congélation du produit obtenu à partir des opérations précédemment décrites, afin d'obtenir un produit pouvant être utilisé ultérieurement par rapport au moment de la préparation.

5. Le procédé selon la revendication 1, **caractérisé en ce qu'**au moins une chambre fermée est créée entre au moins deux desdites feuilles empilées, ayant au moins partiellement ledit bord.

6. Le procédé selon la revendication 1, **caractérisé en ce qu'**au moins une chambre ouverte est créée entre au moins deux desdites feuilles à l'aide d'un moule de formage.
